**Europäisches Patentamt**

**European Patent Office**

**Office européen des brevets**

(19)

(11) Veröffentlichungsnummer: **0 264 810**
**B1**

(12) **EUROPÄISCHE PATENTSCHRIFT**

(45) Veröffentlichungstag der Patentschrift:
**10.01.90**

(51) Int. Cl.⁴: **F02C 3/28, F23R 3/40**

(21) Anmeldenummer: **87115009.0**

(22) Anmeldetag: **14.10.87**

(54) **Kraftwerksprozess mit einer Gasturbine.**

(30) Priorität: **23.10.86  DE 3636024**

(43) Veröffentlichungstag der Anmeldung:
**27.04.88 Patentblatt 88/17**

(45) Bekanntmachung des Hinweises auf die Patenterteilung:
**10.01.90 Patentblatt 90/2**

(84) Benannte Vertragsstaaten:
**BE DE ES FR GB GR SE**

(56) Entgegenhaltungen:
**EP-A- 0 127 825**
**DE-A- 2 708 940**
**DE-A- 3 501 456**

(73) Patentinhaber: **Rheinische Braunkohlenwerke AG.,**
**Stüttgenweg 2, D-5000 Köln 41(DE)**

(72) Erfinder: **Deinert, Jürgen, Dr. Dipl.-Chem., Rissener**
**Strasse 71, D-2000 Wedel/Holstein(DE)**

(74) Vertreter: **Koepsell, Helmut, Dipl.-Ing., Mittelstrasse 7,**
**D-5000 Köln 1(DE)**

## Beschreibung

Die Erfindung betrifft einen Kraftwerksprozeß mit einer Gasturbine zur Umsetzung der Energie von Gas, welches durch die Vergasung von (Brau-) Kohle mit Luft und/oder einem Gemisch aus Sauerstoff und Dampf in einem Vergaser erzeugt und in heißem Zustand nacheinander entstaubt, ggf. entschwefelt und in der Brennkammer der Gasturbine mit Luft verbrannt wird, worauf die Verbrennungsgase in der Turbine entspannt werden.

In Kohlevergasungsanlagen wird aus Kohle unter erhöhter Temperatur und erhöhtem Druck, mit Luft oder Dampf und Sauerstoff als Vergasungsmittel ein nieder- bis mittelkalorisches Brenngas erzeugt, das sich für den Einsatz in kombinierten Gas/Dampf-Turbinen-Kraftwerken besonders eignet. Derartige Kraftwerke besitzen aufgrund der Kombination von Gas- und Dampf-Turbinen einen Wirkungsgrad, der wesentlich über demjenigen von konventionellen Kraftwerken mit Rauchgasentschwefelung und -entstickung liegt.

Aus der DE-OS 35 01 456 ist ein Verfahren zur Reduzierung des $SO_2$ und $NO_x$-Gehaltes von bei der Vergasung von Kohle entstehenden Gasen bekannt, die nach Entschwefelung in einer Turbine verbrannt werden. Um eine Reduzierung des $NO_x$-Ausstoßes mit dem Rauchgas zu erreichen und eine Erhöhung der Leistung des Kraftwerkes durch geringere Kompressionsenergie für die Verbrennungsluft zu erzielen, wird vorgeschlagen, die Verbrennung des entschwefelten Gases in Gegenwart eines $CO_2/O_2$-Gemisches durchzuführen. Durch Verwendung von $CO_2$ wird einerseits die Verbrennungstemperatur abgesenkt und andererseits das $NO_2$-Problem reduziert, da ein praktisch $N_2$-freies Rauchgas anfällt. Gegenüber Luft ist die benötigte $CO_2$-Menge geringer, so daß der Energiebedarf für die $CO_2$-Kompression gesenkt werden kann.

Das bekannte Verfahren hat eine Reihe von Nachteilen. So ist es zunächst sehr unökonomisch, einen Verbrennungsprozess mit reinem Sauerstoff zu betreiben. Die Rückführung von rohem $CO_2$ über den Kompressor führt zu einem Verlust an Wirkungsgrad des Kombikraftwerks. Zwar bewirkt die $CO_2$-Rückführung zur Verbrennung, daß thermisches $NO_x$ nicht oder nur in geringen Mengen entsteht, der Brennstoffstickstoff setzt sich dagegen aufgrund von reaktionskinetsichen Effekten auch bei den niedrigen Temperaturen zu Stickoxiden um, die das System schnell verlassen, so daß eine Gleichgewichtseinstelluntg unmöglich wird. Derartige reaktionskinetische Effekte sind beispielsweise durch die Verweilzeit und den Reaktionsmechanismus vorgegeben. Die Reaktion von $NH_3$ oder HCN mit $O_2$ stoppt nicht auf dem Niveau des $N_2$, sondern geht weiter in die Richtung von NO bzw. $NO_2$, die es gerade zu vermeiden gilt.

Schließlich fehlt bei dem bekannten Verfahren die Entstaubung völlig, und deshalb bestehen Zweifel an der technischen Durchführbarkeit, weil man ein staubbeladenes Gas nicht in einer Gasturbine entspannen kann.

Daneben ist bereits die Reinigung von heißem Gas bekannt, wobei das Gas mit Hilfe von temperatur- und druckbeständigen keramischen Filterkerzen entstaubt und in Festbett-Reaktoren oder auch Wirbelschichtreaktoren durch Reaktion mit Metalloxiden entschwefelt wird. Anschließend werden die entstehenden Metallsulfide wieder regeneriert. Die Heißgasreinigung bietet gegenüber der Gasreinigung bei niedrigen Temperaturen Vorteile, weil damit der Gesamtwirkungsgrad von Kraftwerksprozessen mit einer Gasturbine erhöht werden kann. Die bekannten Verfahren zur Reinigung des unter Druck stehenden heißen Gases bieten jedoch bisher noch keine Möglichkeit einer ausreichenden Entfernung der darin enthaltenen Stickstoffverbindung wie z. B. Ammoniak und Cyanwasserstoffe. Diese müssen zur Vermeidung von Umweltbelastungen nach dem Entspannen des verbrannten Gases in der Gasturbine auf aufwenige Art und Weise aus den Abgasen entfernt werden. Eine der Gasturbine nachgeschaltete De-$NO_x$-Anlage genötigt aufgrund des ca. 150 bis 200fach größeren zu reinigenden effektiven Gasvolumens im Vergleich zum nicht entspannten und unverbrannten Gas einen relativ hohen Druckabfall. Weiterhin ist eine aufwendige Temperaturführung im Abhitze- und Dampferzeugungssystem erforderlich. Daher geht ein solches Verfahren zu Lasten der bei der Heißgasentstaubung und -entschwefelung gewonnenen Vorteile der Wirkungsgraderhöhung.

Aus diesen bekannten Betriebsbedingungen ergibt sich die Aufgabe für die vorliegende Erfindung, bei Beeinflussung der Bildung des thermischen Stickstoffs die Bildung des Brennstoffstickstoffs zu vermindern und gleichzeitig den Wirkungsgrad des Kraftwerksprozesses mit einer Gasturbine zu erhöhen.

Erfindungsgemäß wird diese Aufgabe dadurch gelöst, daß man eine Teilmenge des im heißen Zustand entstaubten und ggf. entschwefelten Gases unter Erhöhung der Temperatur mit Luft und/oder Sauerstoff umsetzt und das Gas zur Aufspaltung der darin enthaltenen Stickstoff- und ggf. höheren Kohlenwasserstoffverbindungen über einen vor der Brennkammer der Gasturbine angeordneten katalytischen Festbettreaktor leitet.

Während die Technik der Heißgasentstaubung bzw. -entschwefelung teilweise schon im Maßstab von Pilotanlagen unter sucht ist, existiert für die Heißgasentstickung insbesondere unter Vergasungsdruck bisher noch kein Konzept. Durch die erfindungsgemäße Lösung für eine wirksame Entstickung des heißen Rohgases ergeben sich einige besondere Vorteile. Eine Verminderung der N-haltigen Komponenten des Gases kann mit Hilfe von kommerziell verfügbaren Katalysatoren zur Ammoniakspaltung durchgeführt werden. Die Spaltung vollzieht sich dabei nach der folgenden chemischen Gleichung:

$$2 \ NH_3 \xrightarrow{\text{kat.}} N_2 + 3 \ H_2.$$

Ausgehend von der Gleichgewichtskonzentration an Ammoniak im Rohgas einer $O_2$/Dampf- bzw. Luftvergasung ergeben sich für verschiedene Reaktionstemperaturen und -drücke hohe Umsetzungsgrade an Ammoniak; diese liegen in der Größenordnung zwischen 99,0 und 99,8 %.

Die im Rohgas enthaltenen Cyanwasserstoffe werden unter solchen Betriebsbedingungen vollständig zersetzt:

$2 \ HCN + 2 \ H_2O = CO + N_2 + 3 \ H_2$.

Höhere Kohlenwasserstoffe reagieren mit Wasserdampf nahezu vollständig; zum Beispiel:

$C_6 \ H_6 + 6 \ H_2O = 6 \ CO + 9 \ H_2$

$C_{10} \ H_8 + 10 \ H_2O = 10 \ CO + 14 \ H_2$

Der zu verwendende Katalysator hat eine Reihe von für diese Betriebsbedingungen günstigen Eigenschaften. Solche sind:

- er ist vorzugsweise nickelhaltig,
- Widerstandsfähigkeit gegen Schwefel bei hohen Tempera turn,
- Hohe Alterungsbeständigkeit; die Standzeiten betragen mehrere Jahre,
- es entsteht kein Ruß,
- Erreichen des chemischen Gleichgewichts der Ammoniakspaltung mit einer maximal 10%-igen Abweichung.

Das staubfreie und gegenbenenfalls entschwefelte Gas wird einem Entstickungsreaktor zugeführt, der aus der Kombination einer Brennkammer mit einem Katalysatorfestbett besteht. In der Brennkammer wird das Gas durch Zugabe von Sauerstoff bzw. Luft partiell verbrannt.

Diese partielle Verbrennung erfolgt üblicherweise auf dem gleichen Durckniveau, bei welchem das Gas durch die Vergasung erzeugt wurde. D. h. geringfügige Druckverluste durch die vorgeschalteten Einrichtungen zur Entstaubung und ggf. Entschwefelung wirken sich praktisch nicht aus. Vielmehr ist die vorgeschaltete partielle Umsetzung des Gases, wobei durch die Temperaturerhöhung eine Volumenzunahme erfolgt, dazu besonders geeignet, solche Druckverluste auszugleichen und auf diese Weise den Gesamtwirkungsgrad des kombinierten Kraftwerkprozesses günstig zu beeinflussen.

Bei der partiellen Umsetzung wird das Temperaturniveau des Brenngases auf die Reaktionstemperatur von ca. 1250 °C erhöht. Das heiße Gas durchströmt anschließend die Katalysatorschüttung des Entstickungsreaktors. Dabei werden Ammoniak $NH_3$ und Cyanwasserstoff $HCN$ gespalten. Das von schädlichen Stickstoffverbindungen befreite Produktgas gelangt in die Brennkammer der Gasturbine. Zur konstruktiven Vereinfachung der Anlage kann der Entstickungsreaktor auch mit der Brennkammer, welche der Gasturbine vorgeschaltet ist, kombiniert bzw. ggf. ganz darin integriert sein.

Mit Hilfe des erfindungsgemäßen katalytischen Festbettreaktors wird eine Verminderung der stickstoffhaltigen Komponenten des Rohgases der Kohlevergasung erreicht. Die Entstickungsgrade erreichen z. B. bei Rohgas, welches in einem bekannten (Hoch-Temperatur-Winkler) HTW-Vergaser bei 20 bar und mit $O_2$/Dampf als Vergasungsmittel erzeugt wurde, Werte, die größer als 99,5 % sind, wobei eine maximal 10 %ige Abweichung vom Gleichgewicht berücksichtigt ist. Die Restanteile N-haltiger Komponenten liegen in diesem Fall bei 19,1 vpm in dem der Gasturbine zugeführten Brenngas. Wird dieses Brenngas in der Gasturbine bei dem üblichen, sehr hohen Luftüberschuß verbrannt, so resultiert aufgrund eines Verdünnungsfaktors von ca. 7 eine $NO_x$-Konzentration von ca. 5,6 mg/Nm$^3$ im Abgas, die durch den Brennstoff-Stickstoff bedingt ist. Dieser Restgehalt an Stickstoffverbindungen im Abgas ist vernachlässigbar klein im Vergleich zu dem in der Brennkammer der Gasturbine üblicherweise entstehenden thermischen $NO_x$.

Nachfolgend wird die Erfindung anhand eines Ausführungsbeispiels näher erläutert. Es zeigen die

- Fig. 1 das Schema eines Kraftwerksprozesses mit einer Gasturbine und
- Fig. 2 einen Reaktor zur Entstickung von Gas im Schnitt.

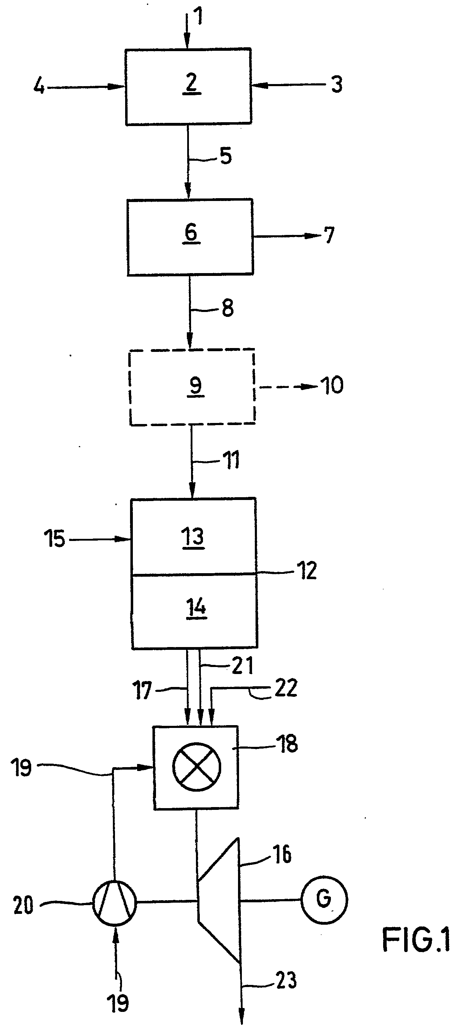

Bei dem Kraftwerksprozeß nach Fig. 1 wird vorgetrocknete und zerkleinerte Braunkohle 1 einem Hoch-Temperatur-Winkler-(HTW)-Vergaser 2 zugeführt und dort mit Hilfe von Dampf/Sauerstoff 3 oder Luft 4 vergast. Das dabei entstehende Rohgas 5 wird einer Kammer 6 zugeführt, wo es mit Hilfe von temperatur- und druckbeständigen keramischen Filterkerzen (nicht gezeigt) entstaubt wird. Dabei wird Feinstaub 7 abgeschieden. Das entstaubte Gas 8 wird dauaufhin ggf. einem Festbettreaktor 9 zugeführt, innerhalb dessen eine Umsetzung von Schwefelwasserstoff $H_2S$ mit Metalloxiden erfolgt. Dabei wird Schwefel 10 ausgeschieden, und die sich bildenden Metallsulfide werden anschließend wieder regeneriert (nicht gezeigt).

Das entschwefelte Gas 11 wird dem Entstickungsreaktor 12 zugeführt, welcher aus den beiden Reaktionsbereichen Brennkammer 13 und katalytischer Festbettreaktor 14 besteht. Das vorgereinigte Gas 11 wird in der Brennkammer 13 des Entstickungsreaktors 12 durch Zufuhr von Sauerstoff und/oder Luft 15 teilweise verbrannt. Das vorgereinigte Gas 11 hat vor Eintritt in die Reaktionskammer 13 eine Temperatur von ungefähr 850 °C; bei der Reaktion mit dem Sauerstoff und/oder der Luft 15 erhöht sich seine Temperatur auf etwa 1250 °C, bei welcher es in den katalytischen Festbettreaktor 14 eintritt, wo die Entstickung stattfindet. Diese Entstickung besteht darin, daß das in dem Gas 11 enthaltene Ammoniak nach der nachfolgenden chemischen Gleichung:

$$2 NH_3 = N_2 + 3 H_2$$

gespalten wird. Ebenfalls gespalten werden die in dem Gas 11 enthaltenen Cyanwasserstoffe durch Reaktion mit dem im Rohgas enthaltenen Wasserdampf nach der folgenden chemischen Gleichung:

$$2 HCN + 2 H_2O = CO + N_2 + 3 H_2.$$

Bei diesen Spaltungen entsteht jedesmal molekularer Stickstoff $N_2$, welcher sich innerhalb des anschließenden Kraftwerksprozesses mit der Gasturbine 16 insbesondere bei der Verbrennung des Gases 17 inert verhält. Der Katalysator innerhalb des katalytischen Festbetts 14 enthält Nickel.

Bei der Reaktion des heißen Gases 11 innerhalb des katalytischen Festbettreaktors 14 reagieren ebenso höhere Kohlenwasserstoffe (z. B. Benzol und Naphtalin) mit Wasserdampf entsprechend den folgenden chemischen Gleichungen:

$$C_6H_6 + 6 H_2O = 6 CO + 9H_2$$
$$C_{10}H_8 + 10 H_2O = 10 CO + 14H_2.$$

Das innerhalb des katalytischen Festbettreaktors 14 von Stickstoffverbindungen gereinigte Gas tritt als Brenn- oder Reingas 17 in die Brennkammer 18 einer Gasturbine 16 ein,wo es zusammen mit Luft 19 verbrannt wird, die von dem mit der Gasturbine 16 gekoppelten Verdichter 20 auf den erforderlichen Betriebsdruck gebracht wird. Dem Reingas 17 wird Stickstoff 22 zugemischt und dann der Brennkammer 18 zugeführt, deren Temperaturen durch die Zufuhrmenge des Stickstoffs 22 so eingestellt werden können, daß sich dieser Stickstoff während der Verbrennung inert verhält und aufgrund der niedrigen Verbrennungstemperaturen die Bildung von thermischem $NO_x$ verringert wird. Wahlweise bzw. zusätzlich kann die Temperatursteuerung der Brennkammer 18 zur Vermeidung der Bildung thermischer Stickoxide auch durch die Zugabe von Wasser bzw. Wasserdampf erfolgen (nicht gezeigt). Das verbrannte und in der Gasturbine 16 entspannte Gas verläßt die Turbine 16 als Abgas 23 und kann in dem sich daran anschließenden kombinierten Kraftwerksprozeß mit einer Dampfturbine ggf. noch zur Nutzung der in ihm enthaltenen fühlbaren Wärme verwendet werden (nicht gezeigt).

Bei Fortfall der Entschwefelung in dem Entschwefelungsreaktor 9 wird das entstaubte Gas 8 unmittelbar in die Reaktionskammer 13 des Entstickungsreaktors 12 überführt, was dadurch möglich wird, daß der nickelhaltige Katalysator des katalytischen Festbetts 14 bei hohen Temperaturen widerstandsfähig ist gegenüber Schwefel. Keinesfalls aber wirkt sich der auch nach einer vorangegangenen Entschwefelung in dem Gas noch verbleibende Restschwefel schädlich auf die Lebensdauer des vorzugsweise nickelhaltigen Katalysators aus. Der Katalysator ist ebenfalls sehr alterungsbeständig, und seine Standzeiten betragen mehrere Jahre. Eine Rußbildung innerhalb des katalytischen Festbettreaktors 14 findet nicht statt.

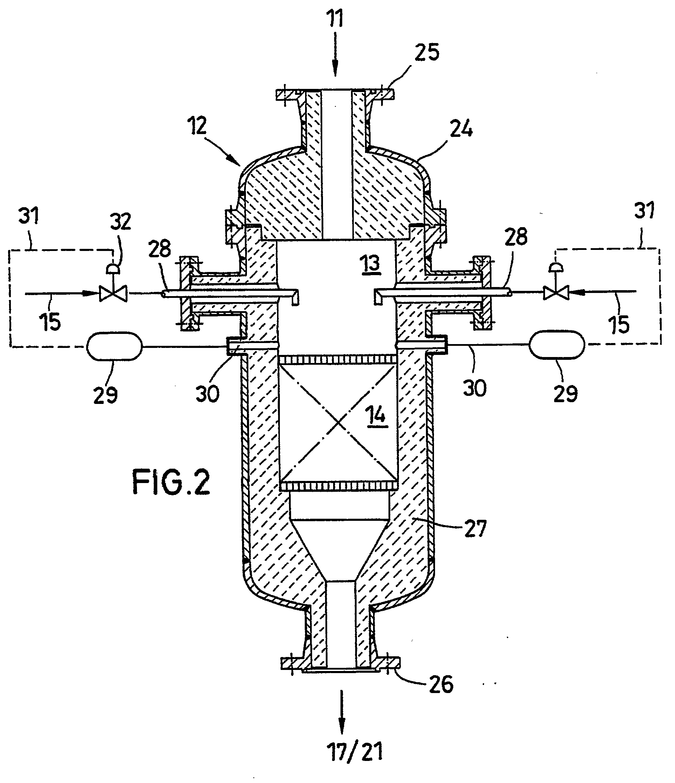

Der in Fig. 2 dargestellte Entstickungreaktor 12 besteht aus einem Stahlmantel 24, welcher einen Einlaß 25 für das entstaubte und üblicherweise entschwefelte Gas 11 und einen Auslaß 26 für das Reingas 17 aufweist. In seinem Inneren ist der Stahlmantel 24 mit einer feuerfesten Auskleidung 27 vollständig ausgekleidet. Der Innenraum des Reaktors 12 unterteilt sich in die beiden Kammerbereiche 13 und 14. Im Bereich der Kammer 13 münden Stützen 28, über welche der Kammer 13 Luft und/oder Sauerstoff 15 zugeführt werden. Die Zufuhr wird von einem Temperaturregler 29 überwacht, der mit einem Fühler 30 in den unteren Teil des Reaktionsraumes 13 eingreift und dessen Ausgang 31 auf ein Ventil 32 wirkt, womit die Zufuhr der Luft und/oder des Sauerstoffs 15 zur Reaktionskammer 13 geregelt wird.

Bei der Reaktion des gereinigten Gases 11 mit der Luft bzw. dem Sauerstoff 15 erhöht sich die Temperatur des Gases 11 auf etwa 1250 °C innerhalb der Reaktionskammer 13.

Mit dieser Temperatur tritt das Gas 11 in den Bereich des Festbettkatalysators 14 ein, welcher aus einer losen Schüttung von vorzugsweise nickelhaltigen Katalysatorträgern besteht. Dabei spalten die in dem heißen Gas 11 enthaltenen Ammoniak- und Cyanwasserstoffverbindungen auf, und es entsteht molekularer Stickstoff 21, der zusammen mit dem Reingas 17 den Entstickungsreaktor 12 verläßt.

Die Umsätze innerhalb des erfindungsgemäßen Kraftwerksprozesses mit einer Gasturbine werden anhand einer Tabelle dargestellt. Im ersten Absatz der Tabelle sind die bei der Vergasung von Braunkohle in einem HTW-Vergaser bei einem Vergasungsdruck von 20 bar bei einem gegebenen Kohledurchsatz stattfindenden Umsätze gezeigt. In der linken Spalte dienen Sauerstoff und Dampf und in der rechten Spalte Luft als Vergasungsmittel. Die dementsprechende, daraus erhaltene Gaszusammensetzung folgt im zweiten Absatz der Tabelle.

Bei der Einführung dieses Gases in den Entstickungsreaktor erfolgt in dessen Brennkammer eine partielle Verbrennung des Gases im Falle der $O_2$/Dampf-Vergasung mit 450 Nm³/h Sauerstoff bzw. im Falle der Luftvergasung mit 3360 Nm³/h Luft. Durch diese partielle Verbrennung wird eine Temperaturerhöhung des Gases von 850 °C auf die für die Entstickung notwendige Reaktionstemperatur von 1250 °C herbeigeführt. Bei der partiellen Verbrennung wird primär der Methananteil des Gases umgesetzt. Der Entstickungsgrad beträgt mehr als 99%.

Die zur Erhöhung der Temperatur des Rohgases der $O_2$/Damp-Vergasung erforderliche Wärmemenge wird durch die Verbrennung von ca. 60% der im Rohgas vorhandenen Methanmenge geliefert. Dabei wird etwa 7,6% der thermischen Leistung des Gases in fühlbare Wärme umgewandelt. Die verbliebenen ca. 40% der Methanmenge reagieren mit dem im Rohgas ebenfalls vorhandenen Wasserdampf bei den hohen Temperaturen im Entstickungsreaktor nahezu vollständig zu CO und $H_2$. Am Austritt des Entstickungsreaktors stellt sich die in der Tabelle unten links angegebenen Gaszusammensetzung ein. Diese Zusammensetzung ergibt sich aus der bei der erhöhten Temperatur veränderten Gleichgewichtslage der Wassergasreaktion
$(CO + H_2O = CO_2 + H_2)$.

Die zur Temperaturerhöhung eines Rohgases der Luftvergasung erforderliche Wärmemenge kann nicht vollständig durch die Umsetzung der im Rohgas vorhandenen Methanmenge gedeckt werden, so daß zusätzlich eine partielle Umsetzung des $H_2$-bzw. CO-Anteils notwendig wird. Diese Tatsache ist u.a. bedingt durch den hohen Ballastanteil an Stickstoff im Rohgas bzw. in der Verbrennungsluft; sie äußert sich in der notwendigen Umwandlung von 36% der thermischen Leistung des Gases in fühlbare Wärme innerhalb der Brennkammer des Entstickungsreaktors.

Am Austritt des Entstickungsreaktors stellt sich analog die in der Tabelle unten rechts an gegebene Gaszusammensetzung ein.

| Vergasungsdruck (bar): 20 | | |
| --- | --- | --- |
| Kohledurchsatz (t/h) | 5 | 3,5 |
| erzeugte Gasmenge ($Nm^3$/h) | 5090 | 3030 |
| Therm. Leistung (GJ/h) | 72,1 | 39,33 |
| maximale Gastemperatur (°C) | 870 | 868 |
| Vergasungsmittel | $O_2$/Dampf | Luft |

| Gaszusammensetzung (Vol-%): | | |
| --- | --- | --- |
| Wasserstoff $H_2$ | 27,1 | 13,2 |
| Wasserdampf $H_2O$ | 20,5 | 7,8 |
| Kohlenmonoxid CO | 26,5 | 19,9 |
| Kohlendioxid $CO_2$ | 21,6 | 12,7 |
| Methan $CH_4$ | 3,7 | 0,9 |
| Stickstoff $N_2$ | 0,2 | 45,2 |
| Ammoniakkonzentration $NH_3$ | 0,4 | 0,26 |

| Entstickungsreaktor: | | |
| --- | --- | --- |
| Eintrittstemperatur °C | 850 | |
| Reaktionstemperatur °C | 1250 | |
| Sauerstoff* $Nm^3$/h | 445 | – |
| Luft* $Nm^3$/h | – | 3360 |
| Tabelle *alternativ | | |

| Gaszusammensetzung Austritt Entstickungsreaktor: | | |
| --- | --- | --- |
| Wasserstoff $H_2$ Vol.-% | 22,2 | 6,2 |
| Wasserdampf $H_2O$ Vol.-% | 29,0 | 16,1 |
| Kohlenmonoxid CO Vol.-% | 32,8 | 17,0 |
| Kohlendioxid $CO_2$ Vol.-% | 15,4 | 15,9 |
| Methan $CH_4$ Vol.-% | 0,0 | 0,0 |
| Stickstoff $N_2$ Vol.-% | 0,6 | 44,8 |
| Ammoniak vpm | 17,4 | 27,3 |
| Entstickungsgrad % | 99,6 | 99 |

EP 0 264 810 B1

**Patentansprüche**

1. Kraftwerksprozeß mit einer Gasturbine zur Umsetzung der Energie von Gas, welches durch die Vergasung von (Braun-) Kohle mit Luft und/oder einem Gemisch aus Sauerstoff und Dampf in einem Vergaser erzeugt und im heißen Zustand nacheinander entstaubt, ggf. entschwefelt und in der Brennkammer der Gasturbine mit Luft verbrannt wird, worauf die Verbrennungsgase in der Turbine entspannt werden, dadurch gekennzeichnet, daß man eine Teilmenge des Gases unter Erhöhung der Temperatur mit Luft und/oder Sauerstoff umsetzt und das Gas zur Aufspaltung der darin enthaltenen Stickstoff- und ggf. höheren Kohlenwasserstoffverbindungen über einen vor der Brennkammer angeordneten katalytischen Festbettreaktor leitet.

2. Prozeß nach Anspruch 1, dadurch gekennzeichnet, daß man die Temperatur des Gases von 850 °C durch zumindest teilweise Umsetzung der darin enthaltenen Komponenten CH$_4$, H$_2$ und CO mit Sauerstoff und/oder Luft vor dem Eintritt in den katalytischen Festbettreaktor auf eine Reaktionstemperatur im Bereich zwischen 1000 und 1500, vozugsweise 1250 °C, erhöht.

3. Kraftwerk mit einer Gasturbine zur Umsetzung der chemischen Energie von Gas, welches durch die Vergasung von (Braun-) Kohle mit Luft und/oder einem Gemisch aus Sauerstoff und Dampf in einem Vergaser erzeugt wird und Einrichtungen zur Entstaubung und ggf. Entschwefelung des Gases im heißen Zustand sowie einer der Gasturbine zugeordneten Brennkammer zur Verbrennung des Gases vor der Entspannung in der Gasturbine, dadurch gekennzeichnet, daß vor der Brennkammer (18) ein Reaktor (12) mit einer Reaktionskammer (13) zur Umsetzung einer Teilmenge des Gases (11) mit Luft und/oder Sauerstoff (15) unter Erhöhung der Temperatur und ein katalytischer Festbettreaktor (14) zur Aufspaltung der in dem partiell umgesetzten Gas (11) enthaltenen Stickstoff- und ggf. höheren Kohlenwasserstoffverbindungen angeordnet ist.

4. Kraftwerk nach Anspruch 3, dadurch gekennzeichnet, daß die Brennkammer (18) und der katalytische Festbettreaktor (14) miteinander zu einer gemeinsamen Baueinheit kombiniert sind.

5. Kraftwerk nach einem der vorhergehenden Ansprüche 3 bis 4, dadurch gekennzeichnet, daß in dem katalytischen Festbettreaktor (14) ein nickelhaltiger Katalysator angeordnet ist.

**Claims**

1. A power station procedure with a gas turbine for conversion of the energy of gas which is produced by the gasification of (brown) coal with air and/or a mixture of oxygen and steam in a gasifier and in the hot condition is successively cleaned of gas, possibly desulphurised and burnt in the combustion chamber of the gas turbine with air whereupon the ccmbustion gases undergo expansion in the turbine, characterised in that a portion of the gas is reacted with air and/or nitrogen, with an increase in temperature, and the gas is passed over a catalytic fixed bed reactor arranged upstream of the combustion chamber for splitting up the nitrogen and possibly higher hydrocarbon compounds contained in the gas.

2. A procedure according to claim 1 characterised in that the temperature of the gas of 850°C is increased to a reaction temperature in the region between 1000 and 1500°C, preferably 1250°C, by at least partial reaction of the components CH$_4$, H$_2$ and CO contained in the gas, with oxygen and/or air, before entry into the catalytic fixed bed reactor.

3. A power station with a gas turbine for conversion of the chemical energy of gas which is produced by gasification of (brown) coal with air and/or a mixture of oxygen and steam in a gasifier, and means for the removal of dust from the gas and possibly desulphurisation of the gas in a hot condition and a combustion chamber associated with the gas turbine for combustion of the gas prior to expansion thereof in the gas turbine characterised in that arranged upstream of the combustion chamber (18) is a reactor (12) with a reaction chamber (13) for reaction of a portion of the gas (11) with air and/or oxygen (15), with an increase in temperature, and a catalytic fixed bed reactor (14) for splitting up the nitrogen and possibly higher hydrocarbon compounds contained in the partially reacted gas (11).

4. A power station according to claim 3 characterised in that the combustion chamber (18) and the catalytic fixed bed reactor (14) are combined together to form a common structural unit.

5. A power station according to one of preceding claims 3 and 4 characterised in that a nickel-bearing catalyst is arranged in the catalytic fixed bed reactor (14).

**Revendications**

1. Procédé d'exploitation d'une centrale thermique à turbine à gaz, pour utiliser l'énergie d'un gaz produit par gazéification de charbon ou de lignite au moyen d'air et/ou d'un mélange d'oxygène et de vapeur dans un gazéificateur, ce gaz subissant ensuite à chaud un traitement de dépoussiérage et éventuellement de désulfuration, avant d'être brûlé avec de l'air dans la chambre de combustion de la turbine à gaz, après quoi les gaz de combustion se détendent dans la turbine, procédé caractérisé en ce qu'on réalise une combustion partielle du gaz avec de l'air et/ou de l'oxygène pour en élever la température, et en ce qu'on fait ensuite passer le gaz dans un réacteur catalytique à lit fixe disposé en amont de la chambre de combustion, pour décomposer les composés azotés et éventuellement les hydrocarbures d'ordre supérieur que contient le gaz.

2. Procédé selon la revendication 1, caractérisé en ce qu'on élève la température du gaz avant son entrée dans le réacteur catalytique à lit fixe, en le traitant à l'oxygène et/ou à l'air, pour assurer une transformation au moins partielle du méthane CH4, de l'hydrogène H2 et du monoxyde de carbone CO contenus dans le gaz, afin d'en porter la température de 850 degrés C à une valeur comprise entre 1000 et 1500 degrés C, cette valeur étant de préférence de 1250 degrés C.

3. Centrale thermique à turbine à gaz pour utiliser l'énergie chimique d'un gaz produit par gazéification du lignite ou du charbon sous l'action de l'air et/ou d'un mélange d'oxygène et de vapeur dans un gazéificateur, cette centrale comportant des équipements pour traiter le gaz à chaud, afin de le dépoussiérer et éventuellement de le désulfurer, ainsi qu'une chambre de combustion associée à la turbine à gaz, pour assurer la combustion du gaz avant sa détente dans la turbine à gaz, centrale caractérisée en ce qu'elle comporte en outre, en amont de la chambre de combustion (18), un réacteur (12) pourvu d'une chambre de réaction (13) pour transformer une partie du gaz (11) sous l'action de l'air et/ou d'oxygène (15) afin d'en élever la température, et un réacteur catalytique à lit fixe (14) pour décomposer, dans le gaz (11) ainsi partiellement transformé, les composés azotés qui s'y trouvent contenus ainsi qu'éventuellement les hydrocarbures d'ordre supérieur.

4. Centrale thermique selon la revendication 3, caractérisée en ce que la chambre de combustion (18) et le réacteur catalytique à lit fixe (14) sont combinés pour constituer un ensemble unitaire.

5. Centrale thermique selon l'une des revendications 3 ou 4, caractérisée en ce que le réacteur catalytique à lit fixe (14) contient un catalyseur à base de nickel.

7

FIG.1

FIG.2